(19) Europäisches Patentamt
European Patent Office
Office européen des brevets

(11) **EP 3 148 856 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **15717139.8**

(22) Anmeldetag: **10.04.2015**

(51) Int Cl.:
*B60W 30/18* (2012.01)        *B60W 50/00* (2006.01)

(86) Internationale Anmeldenummer:
**PCT/EP2015/057895**

(87) Internationale Veröffentlichungsnummer:
**WO 2015/180882 (03.12.2015 Gazette 2015/48)**

(54) **VERFAHREN ZUR EINSTELLUNG EINER SCHLUPFSCHWELLE UND FAHRDYNAMIK-REGELEINRICHTUNG**

METHOD FOR SETTING A SLIP THRESHOLD AND VEHICLE MOVEMENT DYNAMICS CONTROL DEVICE

PROCÉDÉ DE RÉGLAGE D'UNE VALEUR SEUIL DE PATINAGE ET DISPOSITIF DE RÉGULATION DE LA DYNAMIQUE DE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2014 DE 102014210062**

(43) Veröffentlichungstag der Anmeldung:
**05.04.2017 Patentblatt 2017/14**

(73) Patentinhaber: **Continental Teves AG & Co. OHG 60488 Frankfurt (DE)**

(72) Erfinder:
• KERBER, Henning
  64289 Darmstadt (DE)
• KASTEN, Manuel
  65795 Hattersheim (DE)
• ROSZYK, Mario
  61273 Wehrheim (DE)
• BURKHARD, Dieter
  55411 Bingen-Büdesheim (DE)

(56) Entgegenhaltungen:
DE-A1- 19 910 099          DE-A1- 19 936 786
DE-A1-102012 012 475

• DEBES M ET AL: "DYNAMISCHE STABILITAETS CONTROL DSC DER BAUREIHE 7 VON BMV - TEIL 1", ATZ AUTOMOBILTECHNISCHE ZEITSCHRIFT, VIEWEG PUBLISHING, WIESBADEN, DE, Bd. 99, Nr. 3, 1. März 1997 (1997-03-01), Seiten 134-136,138, XP000682345, ISSN: 0001-2785

**Beschreibung**

Gebiet der Erfindung

Die vorliegende Erfindung betrifft ein Verfahren zur Einstellung einer Schlupfschwelle für eine Fahrdynamik-Regeleinrichtung eines Kraftfahrzeugs sowie eine Fahrdynamik-Regeleinrichtung.

Technischer Hintergrund

Moderne Kraftfahrzeuge verfügen über Fahrerassistenzsysteme, die den Fahrer in verschiedenen Fahrsituationen unterstützen, indem sie in Situationen, in denen die Stabilität des Fahrzeuges gefährdet ist, aktiv in die Steuerung des Fahrzeuges eingreifen. Zu den Fahrerassistenzsystemen gehören u.a. Einrichtungen zur Fahrerdynamikregelung, die auch als Electronic Stability Control (ESC) oder elektronisches Stabilitätsprogramm (ESP) bezeichnet werden. Dabei stellt ESP eine Erweiterung und Verknüpfung des bekannten Antiblockiersystems (ABS) mit einer Antriebsschlupfregelung (ASR) und einer elektronischen Bremskraftverteilung dar. Die Antriebsschlupfregelung, die auch als Traktionskontrolle bezeichnet wird, sorgt dafür, dass ein oder mehrere Räder eines Kraftfahrzeuges beim Beschleunigen und gleichzeitig geringer Haftreibung, z.B. bei Glätte, Nässe, etc., nicht durchdrehen.

Die DE 199 36 786 A1 beschreibt einen solchen ESP-Regler.

Eine Kenngröße, die für die Fahrerdynamikregelung eine wichtige Kenngröße darstellt, ist der so genannte Radschlupf. Unter dem Radschlupf ist das Verhältnis zwischen der tatsächlich zurückgelegten Strecke pro Raddrehung und dem tatsächlichen Radumfang bezeichnet. Im Falle eines geringen Schlupfes greifen die Räder sehr gut auf den Fahrbahnbelag auf und können so das Fahrzeug fortbewegen. Umgekehrt kennzeichnet ein hoher Schlupf Situationen, in denen die Räder keinen vollständigen Fahrbahnkontakt mehr haben. So ist beispielsweise das Blockieren der Räder durch einen großen Bremsschlupf und das Durchdrehen der Räder durch einen großen Antriebsschlupf gekennzeichnet. Übermäßigen Brems- und Antriebsschlupf gilt es zu vermeiden, da diese zu einer unerwünschten Instabilität des Kraftfahrzeugs führen können.

Bekannte Antiblockiersysteme vergleichen eine gemessene Radgeschwindigkeit mit einer geschätzten Fahrzeugreferenzgeschwindigkeit und berechnen daraus den absoluten Radschlupf S_abs oder den relativen Radschlupf S_rel:

$$S\_abs = V\_Fzg - V\_Rad$$

$$S\_rel = (V\_Fzg - V\_Rad) / V\_Fzg$$

Neben dem herkömmlichen Bremsschlupf, bei dem die Räder durch übermäßig starkes Bremsen zum Blockieren neigen, kann es auch zu einem berechneten Schlupf kommen, wenn sich das Kraftfahrzeug entlang einer Kurvenbahn bewegt. In diesem Falle drehen sich die einzelnen Räder allein aufgrund deren unterschiedlicher Kurvenradien mit unterschiedlichen Geschwindigkeiten. Es kommt somit zu einem kurvenradiusbedingten, radindividuellen Schlupf, der abhängig von der Position des Rades am Kraftfahrzeug ist. Diese Schlupf wird - zumindest in dieser Patentanmeldung - als Geometrieschlupf bezeichnet. Der Geometrieschlupf basiert u. a. auf den folgenden Effekten:

1. Die kurvenäußeren Räder des Kraftfahrzeuges bewegen sich auf einem größeren Kurvenradius als die kurveninneren Räder und legen daher in der gleichen Zeit eine größere Wegstrecke zurück. Dies bewirkt eine höhere Radgeschwindigkeit der kurvenäußeren Räder.

2. Die Räder der ungelenkten Hinterachse bewegen sich entlang eines engeren Kurvenradius und damit langsamer als die Räder auf der gelenkten Vorderachse. Dieser Effekt ist bei sehr geringen Kurvenradien und/oder bei niedrigeren Fahrzeuggeschwindigkeiten umso gravierender.

3. Bedingt durch Fliehkräfte wirken auf die kurvenäußeren Räder höhere Radlasten als auf die kurveninneren Räder, wodurch sich der dynamische Radradius verkleinert. Dadurch bedingt drehen die Räder bei einer bestimmten Geschwindigkeit mit erhöhter Drehzahl. Da die ABS-Einrichtung aber nicht die tatsächliche Radgeschwindigkeit anhand der durchlaufenen Wegstrecke ermittelt, sondern die Radgeschwindigkeit nur indirekt über die Raddrehzahl ermittelt, sind die von der ABS-Einrichtung ermittelten Radgeschwindigkeiten bei den kurvenäußeren Rädern höher als bei den kurveninneren Rädern.

In bestimmten Fahrsituationen, insbesondere bei sehr geringer Geschwindigkeit und engen Kurven, kann diese Geschwindigkeitsdifferenz zwischen kurvenäußeren und kurveninneren Rädern Größenordnungen von bis zu 6 km/h annehmen. Dieser Effekt sollte daher vor allem bei geringen Geschwindigkeiten bei der Schlupfschwellenauslegung nicht vernachlässigt werden. Andernfalls würde es bei einer Kurvenfahrt bei geringer Geschwindigkeit dazu kommen, dass die kurveninneren Räder allein aufgrund der Kurvenfahrt soweit langsamer drehen, dass die ABS-Regelung aktiviert wird, ohne dass tatsächlich ein ABS-relevantes Ereignis auftritt. Zur Vermeidung dieser Situation existiert nun die Möglichkeit, die Schlupfschwelle entsprechend groß auszulegen. Dieser eher robusten Auslegung der Schlupfschwellen steht aber die Notwendigkeit einer möglichst empfindlichen ABS-Regelung entgegen.

Insofern besteht der Bedarf, bei der Auslegung der Schlupfschwellen die Situation "Geradeausfahrt" von einer "Kurvenfahrt" (Geometrieschlupf) zu unterscheiden. Mit Hilfe einer geeigneten Zusatzsensorik, beispielsweise eines Gierratensensors, Querbeschleunigungssensors, Lenksensors, etc., ließe sich die durch die Kurvenfahrt verursachte Geschwindigkeitsdifferenz unter Kenntnis der Fahrzeuggeometrie sehr genau berechnen. Problematisch ist, wenn eine solche Zusatzsensorik nicht verfügbar ist oder beispielsweise defekt ist.

Zusammenfassung der Erfindung

Vor diesem Hintergrund liegt der vorliegenden Erfindung die Aufgabe zugrunde, eine einfache und verlässliche Möglichkeit der Einstellung der Schlupfschwelle im Falle eines Geometrieschlupfes bereitzustellen.

Erfindungsgemäß wird diese Aufgabe durch ein Verfahren mit den Merkmalen des Patentanspruchs 1 und/oder durch eine Fahrdynamik-Regeleinrichtung mit den Merkmalen des Patentanspruches 14 gelöst.

Demgemäß ist vorgesehen:

- Ein Verfahren zur Einstellung einer Schlupfschwelle für eine Fahrdynamik-Regeleinrichtung eines Kraftfahrzeugs mit den Schritten: Vorgeben einer Schlupfschwelle, ab welcher die Fahrdynamik-Regeleinrichtung zur Reduzierung des Schlupfes aktiviert wird; Ermitteln von radindividuellen Minimalschlüpfen für die Räder des Kraftfahrzeugs, welche aus jeweiligen radindividuellen Schlupfsignalen abgeleitet werden; Erkennen eines Geometrieschlupfes durch Korrelieren aller ermittelten radindividuellen Minimalschlüpfe miteinander und Auswerten der miteinander korrelierten radindividuellen Minimalschlüpfe; und Anheben der Schlupfschwelle im Falle eines erkannten Geometrieschlupfes.

- Eine Fahrdynamik-Regeleinrichtung in oder für ein Kraftfahrzeug, welches mehrere individuell regelbare Räder aufweist, mit einer Vorrichtung zur Bremsschlupfregelung, die dazu ausgebildet ist, ein erfindungsgemäßes Verfahren zur Einstellung der Schlupfschwellen auszuführen.

Die der vorliegenden Erfindung zugrunde liegende Idee besteht zum einen darin, je nach Fahrsituation (Geradeausfahrt, Kurvenfahrt) eine selektive Anhebung der jeweiligen Schlupfschwellen vorzunehmen. Zum anderen wird diese selektive Anhebung der Schlupfschwellen nur in solchen Situationen vorgenommen, bei denen auch tatsächlich ein so genannter Geometrieschlupf auftritt. Die selektive Anhebung der Schlupfschwellen erfolgt in sehr einfacher Weise direkt auf der Basis von gemessenen Radsignalen, welche aus den Radgeschwindigkeiten ermittelt werden. Somit kommt das erfindungsgemäße Verfahren ohne Bereitstellung einer Zusatzsensorik zur Bestimmung der Gierrate, Querbeschleunigung, Lenkeinschlagwinkeleinschlag und dergleichen aus.

Bei dem erfindungsgemäßen Verfahren wird für die Bestimmung der Schlupfschwelle aus einem Vergleich der gemessenen Radsignale aller Räder für jedes dieser Räder ein radindividueller Schlupf-Offset berechnet. Dabei erfolgt eine Korrelation der ermittelten Radsignale mit den entsprechenden Radsignalen der übrigen Räder. Dadurch, dass die entsprechenden Radsignale verschiedener Räder miteinander verglichen werden, wird die Wahrscheinlichkeit eines Fehlers reduziert. Gleichzeitig kann auf diese Weise die Schlupfschwelle im Falle eines erkannten Geometrieschlupfes möglichst genau bestimmt werden.

Vorteilhafte Ausgestaltungen und Weiterbildungen ergeben sich aus den weiteren Unteransprüchen sowie aus der Beschreibung unter Bezugnahme auf die Figuren der Zeichnung.

In einer bevorzugten Ausgestaltung wird bei dem Schritt des Anhebens der Schlupfschwelle diese für jedes Rad des Fahrzeuges individuell angehoben. Insbesondere erfolgt das Anheben der Schlupfschwelle nach Maßgabe des für das jeweilige Rad ermittelten, radindividuellen Minimalschlupfes.

Vorzugsweise erfolgt das Anheben der Schlupfschwelle im Fall eines erkannten Geometrieschlupfes zumindest um den Wert des ermittelten radindividuellen Minimalschlupfes. Ein geringfügig höherer Wert für die Schlupfschwelle als der ermittelte Minimalschlupf ist sinnvoll und vorteilhaft, damit die Antiblockierregelung nicht vorzeitig regelnd eingreift. Denkbar wäre prinzipiell aber auch, wenn die Schlupfschwelle im Fall eines erkannten Geometrieschlupfes um einen Wert, der geringfügig kleiner ist als der ermittelte radindividuelle Minimalschlupf, angehoben wird. Dadurch wäre die Antiblockierregelung sehr empfindlich ausgelegt und würde bereits sehr frühzeitig, z.B. kurz vor dem Eintreten eines Schlupfes einsetzen.

Ebenfalls vorteilhaft ist es, wenn beim Anheben der Schlupfschwelle ein maximal vorgegebener Schlupfwert nicht überschritten wird. Auf diese Weise wird sichergestellt, dass eine sicherheitskritische Schlupfschwelle, ab der das Kraftfahrzeug instabil zu werden droht, nie überschritten wird. Dieser vorgegebene maximale Schlupfwert kann zum Beispiel abgeschätzt werden. Alternativ kann dieser maximale Schlupfwert situationsabhängig aus einer zulässigen Querbeschleunigung, einer aktuellen Fahrzeuggeschwindigkeit, einem geschwindigkeitsabhängigen maximalen Kurvenradius, einer Gierrate oder dergleichen abgeleitet werden.

In einer bevorzugten Ausgestaltung wird ein radindividuelles Schlupfsignal für ein jeweiliges Rad des Kraftfahrzeuges dadurch erzeugt, dass fortwährend die Differenz einer gemessenen aktuellen Radgeschwindigkeit für das jeweilige Rad und einer Referenzgeschwindigkeit berechnet wird. Die Referenzgeschwindigkeit kann beispielsweise aus den bei allen Rädern gemessenen Radgeschwindigkeiten abgeleitet werden. Beispielsweise kann als Referenzgeschwindigkeit die jeweils höchste gemessene Geschwindigkeit eines Rades verwendet werden. Für die Schlupfberechnung werden die so ermittelten Radgeschwindigkeiten der einzelnen Räder mit dieser Referenzgeschwindigkeit verglichen.

In einer bevorzugten Ausgestaltung wird im Schritt des Ermittelns von radindividuellen Minimalschlüpfen eine Minimalwertermittlung vorgenommen. Hierzu wird für eine vorgegebene Zeitdauer ein geringster Signalwert des einem jeweiligen Rad zugeordneten radindividuellen Schlupfsignals ermittelt. Dieser so ermittelte geringste Signalwert wird dann als radindividueller Minimalschlupf für dieses Rad verwendet. Für diese Minimalwertermittlung kommen mehrere Verfahren in Betracht, wie beispielsweise die Verwendung eines Schleppzeigers oder auch eines zeitlich asymmetrischen Tiefpassfilters. Bei Verwendung eines zeitlich asymmetrischen Tiefpassfilters besteht vorteilhafterweise die Möglichkeit, dass bei der Filterauslegung die Filterkonstanten an die jeweilige Fahrsituation angepasst werden können. Auf diese Weise kann beispielsweise die Filterwirkung verstärkt werden, wenn es sich bei dem aktuell ermittelten Schlupf beispielsweise nicht um einen Geometrieschlupf, sondern um einen dynamischen Bremsschlupf handelt. Neben den erwähnten Schleppzeigern oder Tiefpassfiltern zur Minimalwertermittlung können natürlich auch andere, mehr oder weniger komplexen Verfahren zur Ermittlung oder Messung des Effektivwertes, Scheitelwertes, etc. herangezogen werden.

In einer besonders bevorzugten Ausgestaltung geht man bei der Auswertung der miteinander korrelierten radindividuellen Minimalschlüpfen davon aus, dass ein Geometrieschlupf immer an mehreren Rädern des Kraftfahrzeuges gleichzeitig auftritt. Insbesondere tritt ein derartiger Geometrieschlupf meist an Rädern derselben Fahrzeugseite und vor allem an den jeweiligen kurveninneren Rädern gleichzeitig auf. Zusätzlich oder alternativ geht man bei dieser Auswertung davon aus, dass der radindividuelle Geometrieschlupf bei mindestens einem Rad und insbesondere bei einem Rad der jeweils anderen Fahrzeugseite bzw. der kurvenäußeren Fahrzeugseite, annähernd oder gleich Null ist. Dadurch kann plausibilisiert werden, ob der ermittelte radindividuelle Schlupf tatsächlich den Geometrieschlupf repräsentiert oder durch andere Effekte, z.B. durch starkes Bremsen oder Driften, hervorgerufen wurde.

In einer ebenfalls bevorzugten Ausgestaltung geht man beim Auswerten der miteinander korrelierten radindividuellen Minimalschlüpfe davon aus, dass bei Vorhandensein eines Geometrieschlupfes der radindividuelle Minimalschlupf eines Hinterachsenrades größer ist als der jeweilige radindividuelle Minimalschlupf eines jeweiligen Vorderachsenrades, jeweils bezogen auf dieselbe Fahrzeugseite.

Das erfindungsgemäße Verfahren ist besonders bevorzugt bei geringen Fahrzeuggeschwindigkeiten. Insbesondere ist das erfindungsgemäße Verfahren vorteilhaft bei Fahrzeuggeschwindigkeiten von weniger als 50 km/h, vorzugsweise bei Geschwindigkeiten von weniger als 25 km/h. Besonders bevorzugt ist das erfindungsgemäße Verfahren bei sehr geringen Geschwindigkeiten im Bereich von weniger als 10 km/h, da hier die prozentuale Abweichung der Radgeschwindigkeiten der verschiedenen Räder voneinander am Größten ist.

Das erfindungsgemäße Verfahren und hier insbesondere die Verfahrensschritte V2 bis V4 werden in einer bevorzugten Ausgestaltung lediglich bei positivem Bremsschlupf und/oder einer Kurvenfahrt eingesetzt. Unter positivem Bremsschlupf, ist eine Fahrsituation bezeichnet, bei der aktives Bremsen stattfindet.

In einer bevorzugten Ausgestaltung wird die Schlupfschwelle wieder auf die vorgegebene Schlupfschwelle zurückgesetzt, sobald kein Geometrieschlupf mehr vorliegt.

In einer bevorzugten Ausgestaltung ist die Fahrdynamikregeleinrichtung Bestandteil einer ABS-Einrichtung oder ASR-Einrichtung.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Inhaltsangabe der Zeichnung

Die vorliegende Erfindung wird nachfolgend anhand der in den schematischen Figuren der Zeichnungen angegebenen Ausführungsbeispiele näher erläutert. Es zeigen dabei:

Fig. 1 ein Blockschaltbild für ein Kraftfahrzeug mit einer erfindungsgemäßen Fahrdynamik-Regeleinrichtung;

Fig. 2 ein Ablaufdiagramm zur Erläuterung eines ersten, allgemeinen Beispiels des erfindungsgemäßen Verfahrens zur Einstellung einer Schlupfschwelle für eine Fahrdynamik-Regeleinrichtung;

Fig. 3 ein Ablaufdiagramm zur Erläuterung eines zweiten Beispiels des erfindungsgemäßen Verfahrens.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

Beschreibung von Ausführungsbeispielen

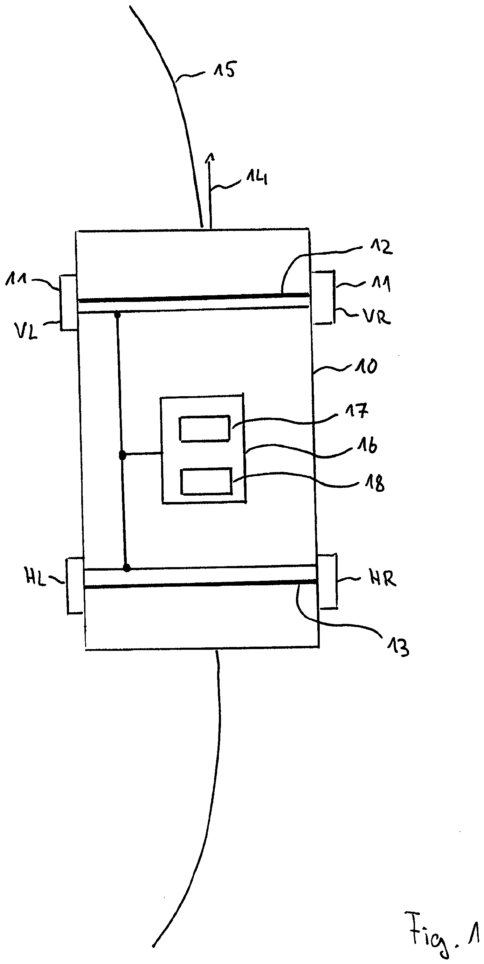

Fig. 1 zeigt ein Blockschaltbild für ein Kraftfahrzeug, welches mit einer erfindungsgemäßen Fahrdynamik-Regeleinrichtung ausgestattet ist. Das Kraftfahrzeug, das hier mit Bezugszeichen 10 bezeichnet ist, umfasst vier Räder 11, wobei jeweils zwei Räder 11 an der gelenkten Vorderachse 12 und jeweils zwei Räder 11 an der ungelenkten Hinterachse 13 befestigt sind. Mit VL und VR sind die Vorderräder links bzw. rechts und mit HL und HR sind die jeweiligen Räder an der Hinterachse links bzw. rechts bezeichnet. Es sei angenommen, dass sich das Kraftfahrzeug 10 in Fahrtrichtung 14 entlang einer Kurvenbahn 15 bewegt. In diesem Zustand bilden die Räder VL, HL die kurveninneren Räder und die Räder VR, HR die kurvenäußeren Räder.

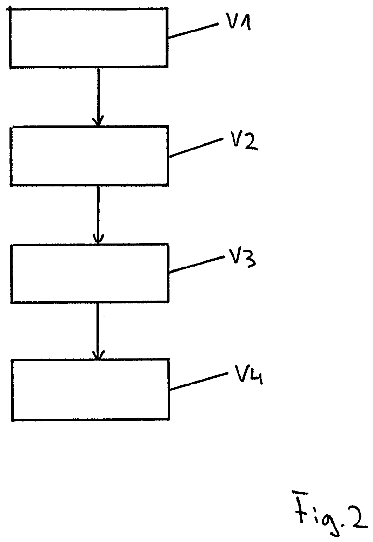

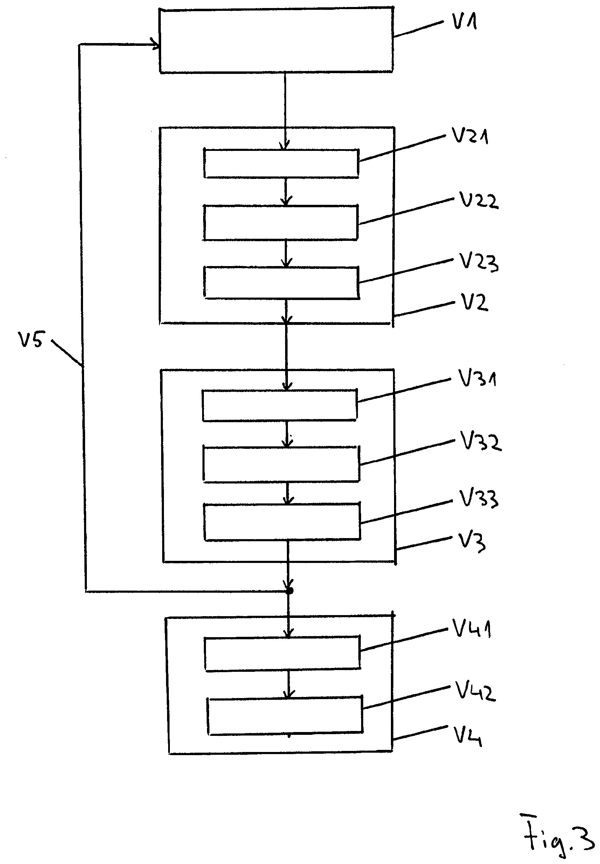

Das Kraftfahrzeug 10 verfügt ferner über eine erfindungsgemäße Fahrdynamik-Regelungseinrichtung 16, welche zum Beispiel als ESP ausgebildet sein kann und zu diesem Zwecke ein Antiblockiersystem 17 und eine Antriebsschlupfregelung 18 umfasst. Zu diesem Zwecke ist die Fahrdynamik-Regelungseinrichtung 16 jeweils mit den Rädern 11 gekoppelt. Die Funktionsweise der Fahrdynamik-Regeleinrichtung 16 wird nachfolgend mit Bezug auf die Fig. 2 und 3 noch detailliert erläutert.

Die verschiedenen Räder 11 werden über zumindest eine der Achsen 12, 13 angetrieben und über jeweilige (hier nicht dargestellte) Bremseinrichtungen abgebremst. Jedem der Räder 11 ist ferner ein (hier nicht dargestellter) Drehzahlsensor zugeordnet, welcher die Drehzahl und somit die jeweilige Radgeschwindigkeit des entsprechenden Rades 11 ermittelt. Während der Fahrt überwachen diese Drehzahlsensoren zusammen mit der Fahrdynamik-Regeleinrichtung 16 das Schlupfverhalten der verschiedenen Räder 11, also sowohl den Bremsschlupf als auch den Antriebsschlupf.

Fig. 2 zeigt ein Ablaufdiagramm zur Erläuterung eines ersten, allgemeinen Beispiels des erfindungsgemäßen Verfahrens zur Einstellung einer Schlupfschwelle für eine Fahrdynamik-Regelungseinrichtung eines Kraftfahrzeugs.

In einem ersten Schritt V1 wird eine allgemeine Schlupfschwelle, ab welchem die Fahrdynamik-Regeleinrichtung zur Reduzierung eines auftretenden herkömmlichen Schlupfes aktiviert wird, vorgegeben.

Anschließend werden in einem weiteren Schritt V2 radindividuelle Minimalschlüpfe für die Räder des Kraftfahrzeuges ermittelt, welche aus jeweiligen radindividuellen Schlupfsignalen abgeleitet werden. Hierzu werden zunächst (z.B. über einen Vergleich der gemessenen Radgeschwindigkeiten mit der Fahrzeugreferenzgeschwindigkeit) die radindividuellen Schlupfsignale berechnet und dann aus diesen radindividuellen Schlupfsignalen die radindividuellen Minimalschlüpfe ermittelt.

In einem dritten Schritt V3 wird das Vorhandensein eines Geometrieschlupfes erkannt. Unter einem Geometrieschlupf sind derartige Schlüpfe zu verstehen, bei denen der Schlupfwert eines jeweiligen Rades von der Einbauposition des jeweiligen Rades am Kraftfahrzeug abhängt. Im Falle eines Geometrieschlupfes sind also die jeweiligen radindividuellen Schlupfsignale abhängig von der Einbauposition des jeweiligen Rades verschieden. Das Erkennen des Geometrieschlupfes erfolgt hier durch ein Korrelieren aller ermittelten radindividuellen Minimalschlüpfe miteinander. Anschließend werden die so miteinander in Korrelation gebrachten radindividuellen Minimalschlüpfe ausgewertet.

Im Falle eines erkannten Geometrieschlupfes wird die Schlupfschwelle in einem vierten Schritt V4 entsprechend angehoben.

Fig. 3 zeigt ein Ablaufdiagramm zur Erläuterung eines zweiten Beispiels des erfindungsgemäßen Verfahrens. Für dieses erfindungsgemäße Verfahren sei angenommen, dass der Bremsschlupf positiv ist.

Im ersten Schritt V1 wird auch hier wieder eine allgemeine Schlupfschwelle $S\_0$ vorgegeben. Diese Schlupfschwelle $S\_0$ wird derart festgelegt, dass sie für den herkömmlichen Betrieb, bei dem also kein Geometrieschlupf vorhanden ist, beispielsweise bei einem Bremsvorgang oder bei einer Geradeausfahrt, herangezogen wird. Üblicherweise kann diese Schlupfschwelle S_0 relativ gering gewählt werden, da im herkömmlichen Fahrbetrieb in der Regel kein Radschlupf auftreten sollte. In diesem Zustand sollte die Fahrdynamik-Regeleinrichtung sehr empfindlich ausgelegt sein und unmittelbar in die Antiblockierregelung eingreifen, sofern die Räder zum Blockieren neigen.

Im nächsten Schritt V2 werden radindividuelle Minimalschlüpfe für die jeweiligen Räder des Kraftfahrzeuges ermittelt. Hierzu werden in einem Unterschritt V21 mittels der jeweiligen Radsensoren die entsprechenden Radgeschwindigkeiten - direkt oder indirekt über Radumdrehungen - für sämtliche Räder 11 des Kraftfahrzeuges ermittelt. Es sei angenommen, dass die jeweils höchste ermittelte Radgeschwindigkeit dann die Referenzgeschwindigkeit bildet. Die Referenzgeschwindigkeit kann aber auch durch einen mehr oder weniger komplexen Algorithmus berechnet werden. Im Unterschritt V22 werden aus der Differenz zwischen dieser Referenzgeschwindigkeit und den gemessenen Radgeschwindigkeiten die radindividuellen Schlupfsignale S_VL, S_VR, S_HL, S_HR gebildet. Mit VL, VR, HL, HR seien hier und nachfolgend jeweils die zugeordneten Einbaupositionen der Räder bezeichnet.

Während des Fahrbetriebes und insbesondere während der ABS-Regelung schwankt der Schlupf an jedem Rad und damit einhergehend die entsprechenden radindividuellen Schlupfsignale S_VL, S_VR, S_HL, S_HR fortwährend. Um nun überhaupt das Vorhandensein eines Geometrieschlupfes ermitteln zu können, ist es erforderlich, den nicht ausgeregelten Schlupf als Referenz heranzuziehen. Dieser nicht ausgeregelte Schlupf liegt dann vor, wenn ein minimaler Schlupf gegeben ist. Für die Bewertung, ob an einem Rad also ein Geometrieschlupf vorhanden ist oder nicht, sind also lediglich Situationen mit sehr geringem Schlupf heranzuziehen. Für die Ermittlung dieser so genannten radindividuellen Minimalschlüpfe Smin_VL, Smin_VR, Smin_HL, Smin_HR im Unterschritt V23 kommen verschiedene Verfahren in Betracht:

In einer ersten Variante kann beispielsweise ein Schleppzeiger zur Ermittlung der radindividuellen Minimalschlüpfe Smin_VL, Smin_VR, Smin_HL, Smin_HR verwendet werden. Dieser Schleppzeiger muss immer wieder zurückgesetzt werden.

Eine alternative und vorteilhafte Variante sieht die Verwendung eines zeitlich asymmetrischen Tiefpassfilters vor, welche keine Filterwirkung zeigt, wenn $Si < Smin\_i$ (für $i = VL, VR, HL, HR$). Für $Si \geq Smin\_i$ ist eine hohe Filterwirkung vorgesehen. Im Unterschied zu der eben beschriebenen Verwendung des Schleppzeigers umgeht man mit dieser Filterlösung das Problem der Reinitialisierung des Schleppzeigers. Zusätzlich hat man hier die Möglichkeit, bei der Filterauslegung die Filterkonstante des zeitlich asymmetrischen Tiefpassfilters an die jeweilige Fahrsituation anzupassen. Beispielsweise könnte die Filterwirkung verstärkt werden, wenn es sich bei dem aktuellen Schlupf um einen dynamischen Bremsschlupf und somit nicht um einen Geometrieschlupf handelt.

Anschließend wird in Schritt V3 erkannt, ob Geometrieschlupf vorliegt oder nicht. Das Erkennen des Geometrieschlupfes erfolgt durch Korrelieren aller ermittelten radindividuellen Minimalschlüpfe Smin_VL, Smin_VR, Smin_HL, Smin_HR miteinander und einer anschließenden Auswertung der miteinander korrelierten radindividuellen Minimalschlüpfe.

Bei dieser Auswertung wird zum Beispiel berücksichtigt, dass ein Geometrieschlupf immer an mehreren Rädern, beispielsweise an den kurveninneren Rädern (im Beispiel in Fig. 1 sind dies Räder VL, HL), gleichzeitig auftreten. Zusätzlich muss der Geometrieschlupf an mindestens einem kurvenäußeren Rad (im Beispiel in Fig. 1 sind dies die Räder VR, HR) Null betragen, sofern der Schlupf ausgeregelt ist. Auf diese Weise wird im Unterschritt V31 plausibilisiert, dass die ermittelten Minimalschlüpfe Smin_VL, Smin_VR, Smin_HL, Smin_HR tatsächlich durch Geometrieschlupf oder durch andere Effekte hervorgerufen wurde.

Von den ermittelten radindividuellen Minimalschlüpfen Minimalschlüpfe Smin_VL, Smin_VR, Smin_HL, Smin_HR wird im Unterschritt V32 jeweils der kleinste Schlupfwert abgezogen, so dass anschließend mindestens einer der ermittelten radindividuellen Minimalschlüpfe Smin_VL, Smin_VR, Smin_HL, Smin_HR gleich Null ist.

Danach werden in einem Unterschritt V33 aus den radindividuellen Schlupfsignalen unter Betrachtung der einzelnen Achsen (vorne, hinten) und einzelnen Fahrzeugseiten (links, rechts) die radindividuellen Minimalschlüpfe Smin_links, Smin_rechts, Smin_vorne, Smin_hinten gebildet. Ist nun Geometrieschlupf vorhanden, so muss er an beiden Rädern einer Fahrzeugseite vorhanden sein, d.h. beide Räder derselben Fahrzeugseite müssen einen Minimalschlupf aufweisen. Dieser Minimalschlupf wird durch Smin_links bzw. Smin_rechts repräsentiert. Ist einer der beiden Werte größer als Null, so besteht zumindest die begründete Annahme, dass es sich bei diesem Wert um den Geometrieschlupf handelt.

Man kann anschließend in einem Unterschritt V41 des Schrittes V4 die Schlupfschwellen der Räder dieser Fahrzeugseite um einen Geometrieschlupf-Offset selektiv anheben. Beispielsweise kann vorgesehen sein:

Slip_Offset_VL = Slip_Offset_HL = Smin_links
Slip_Offset_VR = Slip_Offset_HR = Smin_rechts

Sinnvollerweise werden zudem in einem weiteren Unterschritt V42 die so ermittelten Geometrieschlupf-Offset-Werte auf eine obere Offset-Schwelle begrenzt. Diese obere Offset-Schwelle ist so gewählt, wie sie im realen Betrieb im Fahrzeug überhaupt auftreten kann. So kann dieser obere Offset-Wert beispielsweise unter der Annahme eines maximalen Querbeschleunigungslimits, etwa die bei der aktuellen Fahrzeuggeschwindigkeit unter Berücksichtigung der dabei möglichen Kurvenradien, sich ergebende Gierraten, etc. abschätzen und daraus ein oberes Limit für den Geometrieschlupf-Offset vorgeben.

Für das Erkennen des Vorhandenseins eines Geometrieschlupfes in Schritt V3 kann auch ein Effekt genutzt werden, wonach bei einer Kurvenfahrt - insbesondere bei engen Kurven und niedrigen Geschwindigkeiten - die Radgeschwindigkeit an der ungelenkten Hinterachse kleiner ist als an der gelenkten Vorderachse. Dadurch bedingt ist der minimale Schlupf an der Hinterachse größer als der minimale Schlupf an der Vorderachse, so dass Smin_hinten größer ist als Smin_vorne. In diesem Falle kann vorgesehen sein, dass der Geometrieschlupf-Offset an der Hinterachse um die Differenz Smin_hinten, Smin_vorne oder zumindest einen Teil davon angehoben wird. Auch hier kann man diese Anhebung begrenzen, beispielsweise geschwindigkeitsabhängig.

Sobald im Schritt V3 erkannt wird, dass kein Geometrieschlupf mehr vorliegt, kehrt das Verfahren über den Zweig V5 wieder zum Schritt V1 zurück, d.h. es wird wieder die vorgegebene Schlupfschwelle, welche für den herkömmlichen Betrieb relevant ist, eingestellt.

Obwohl die vorliegende Erfindung vorstehend anhand bevorzugter Ausführungsbeispiele beschrieben wurde, ist sie darauf nicht beschränkt, sondern auf vielfältige Art und Weise modifizierbar. Insbesondere wurde die Erfindung vorstehend anhand eines Antiblockiersystems erläutert, welches durch die Funktion des erfindungsgemäßen Verfahrens erweitert wurde. Es versteht sich von selbst, dass die vorliegende Erfindung zusätzlich oder alternativ auch in einem Antriebsschlupfregelsystem (TCS, ASR) vorteilhaft einsetzbar ist.

BEZUGSZEICHEN

| | |
|---|---|
| 10 | Kraftfahrzeug |
| 11 | Räder |
| 12 | (gelenkte) Vorderachse |
| 13 | (ungelenkte) Hinterachse |
| VL, VR | Vorderräder links bzw. rechts |
| HL, HR | Hinterräder links bzw. rechts |
| 14 | Fahrtrichtung |
| 15 | Kurvenbahn |
| 16 | Fahrdynamik-Regelungseinrichtung |
| 17 | Antiblockiersystem, ABS |
| 18 | Antriebsschlupfregelung, ASR |
| | |
| V1-V5 | Verfahrensschritte |
| V21-V23 | Unterschritte |
| V31-V33 | Unterschritte |
| V41-V42 | Unterschritte |

**Patentansprüche**

1. Verfahren zur Einstellung einer Schlupfschwelle für eine Fahrdynamik-Regeleinrichtung (16) eines Kraftfahrzeugs (10) mit den Schritten:

   Vorgeben (V1) einer Schlupfschwelle, ab welcher die Fahrdynamik-Regeleinrichtung (16) zur Reduzierung des Schlupfes aktiviert wird;
   Ermitteln (V2) von radindividuellen Minimalschlüpfen für die Räder (11) des Kraftfahrzeugs (10), welche aus jeweiligen radindividuellen Schlupfsignalen abgeleitet werden;
   Erkennen (V3) eines Geometrieschlupfes durch Korrelieren (V32) aller ermittelten radindividuellen Minimalschlüpfe miteinander und durch Auswerten (V33) der miteinander korrelierten radindividuellen Minimalschlüpfe; und
   Anheben (V4) der Schlupfschwelle im Falle eines erkannten Geometrieschlupfes.

2. Verfahren nach Anspruch 1,
   **dadurch gekennzeichnet,**

dass beim Schritt des Anhebens (V4) der Schlupfschwelle diese für jedes Rad (11) des Kraftfahrzeugs (10) individuell, insbesondere nach Maßgabe des für das jeweilige Rad (11) ermittelten radindividuellen Minimalschlupfes, angehoben wird.

3. Verfahren nach einem der vorherigen Ansprüche,
dadurch gekennzeichnet,
dass beim Anheben (V4) der Schlupfschwelle diese zumindest um den den Wert des ermittelten radindividuellen Minimalschlupfes angehoben wird.

4. Verfahren nach einem der vorherigen Ansprüche,
dadurch gekennzeichnet,
dass beim Anheben (V4) der Schlupfschwelle ein maximaler vorgegebener Schlupfwert nicht überschritten wird.

5. Verfahren nach Anspruch 4,
dadurch gekennzeichnet,
dass der vorgegebene maximale Schlupfwert aus einer zulässigen Querbeschleunigung, einer Fahrzeuggeschwindigkeit, einem geschwindigkeitsabhängigen maximalen Kurvenradius und/oder einer Gierrate abgeleitet wird.

6. Verfahren nach einem der vorherigen Ansprüche,
dadurch gekennzeichnet,
dass ein radindividuelles Schlupfsignal für ein jeweiliges Rad des Kraftfahrzeuges dadurch erzeugt wird, dass fortwährend die Differenz einer Referenzgeschwindigkeit und einer gemessenen aktuellen Radgeschwindigkeit für das jeweilige Rad (11) berechnet wird.

7. Verfahren nach einem der vorherigen Ansprüche,
dadurch gekennzeichnet,
dass im Schritt des Ermittelns (V2) von radindividuellen Minimalschlüpfen für eine vorgegebene Zeitdauer ein geringster Signalwert des einem jeweiligen Rad (11) zugeordneten radindividuellen Schlupfsignales ermittelt und als radindividueller Minimalschlupf für dieses Rad (11) verwendet wird.

8. Verfahren nach einem der vorherigen Ansprüche,
dadurch gekennzeichnet,
dass beim Auswerten (V33) der miteinander korrelierten radindividuellen Minimalschlüpfe davon ausgegangen wird, dass ein Geometrieschlupf immer an mehreren Rädern (11) des Kraftfahrzeugs (10) gleichzeitig, insbesondere an Rädern (11) derselben Fahrzeugseite, auftritt.

9. Verfahren nach einem der vorherigen Ansprüche,
dadurch gekennzeichnet,
dass beim Auswerten (V33) der miteinander korrelierten radindividuellen Minimalschlüpfe davon ausgegangen wird, dass der radindividuelle Geometrieschlupf bei mindestens einem Rad (11), insbesondere bei einem Rad (11) der jeweils anderen Fahrzeugseite, annähernd Null ist.

10. Verfahren nach einem der vorherigen Ansprüche,
dadurch gekennzeichnet,
dass beim Auswerten (V33) der miteinander korrelierten radindividuellen Minimalschlüpfe davon ausgegangen wird, dass im Falle eines Geometrieschlupfes der radindividuelle Minimalschlupf eines Hinterachsen-Rades (HL, HR) größer ist als der radindividuelle Minimalschlupf eines jeweilige Vorderachsen-Rades (VL, VR) an derselben Fahrzeugseite.

11. Verfahren nach einem der vorherigen Ansprüche,
dadurch gekennzeichnet,
dass das Verfahren bei geringen Fahrzeuggeschwindigkeiten eingesetzt wird.

12. Verfahren nach einem der vorherigen Ansprüche,
dadurch gekennzeichnet,
dass die Schritte V2 bis V4 bei positivem Bremsschlupf und/oder einer Kurvenfahrt eingesetzt wird.

13. Verfahren nach einem der vorherigen Ansprüche,

**dadurch gekennzeichnet,**
**dass** die vorgegebene Schlupfschwelle erneut eingestellt wird (V5), sobald die Bedingungen für einen ermittelten Geometrieschlupf nicht mehr vorliegen.

14. Fahrdynamik-Regeleinrichtung (16) in oder für ein Kraftfahrzeug (10), welches mehrere individuell regelbare Räder (11) aufweist, mit einer Vorrichtung zur Bremsschlupfregelung (18), die dazu ausgebildet ist, ein Verfahren zur Einstellung der Schlupfschwellen nach einem der vorherigen Ansprüche auszuführen.

15. ABS-Einrichtung (17) oder ASR-Einrichtung (18), **dadurch gekennzeichnet, dass** diese eine Fahrdynamik-Regeleinrichtung nach Anspruch 14 umfasst.

**Claims**

1. Method for setting a slip threshold for a vehicle movement dynamics control device (16) of a motor vehicle (10) comprising the steps:

   predefining (V1) a slip threshold starting from which the vehicle movement dynamics control device (16) is activated to reduce the slip;
   determining (V2) wheel-specific minimum slip values for the wheels (11) of the motor vehicle (10), which values are derived from respective wheel-specific slip signals;
   detecting (V3) a geometric slip by correlating (V32) all the determined wheel-specific minimum slip values with one another and by evaluating (V33) the wheel-specific minimum slip values which are correlated with one another; and
   raising (V4) the slip threshold when geometric slip is detected.

2. Method according to Claim 1,
   **characterized**
   **in that** in the case of the step of raising (V4) the slip threshold, the latter is raised individually for each wheel (11) of the motor vehicle (10), in particular in accordance with the wheel-specific minimum slip value determined for the respective wheel (11).

3. Method according to one of the preceding claims,
   **characterized**
   **in that** in the step of raising (V4) the slip threshold, the latter is raised at least by the value of the determined wheel-specific minimum slip value.

4. Method according to one of the preceding claims,
   **characterized**
   **in that** in the step of raising (V4) the slip threshold a maximum predefined slip value is not exceeded.

5. Method according to Claim 4,
   **characterized**
   **in that** the predefined maximum slip value is derived from a permissible lateral acceleration, a vehicle velocity, a velocity dependent maximum curve radius and/or a yaw rate.

6. Method according to one of the preceding claims,
   **characterized**
   **in that** a wheel-specific slip signal is generated for a respective wheel of the motor vehicle by virtue of the fact that the difference between a reference speed and a measured current wheel speed for the respective wheel (11) is continuously calculated.

7. Method according to one of the preceding claims,
   **characterized**
   **in that** in the step of determining (V2) wheel-specific minimum slip values for a predefined time period a minimum signal value of the wheel-specific slip signal assigned to a respective wheel (11) is determined and is used as a wheel-specific minimum slip value for this wheel (11).

8. Method according to one of the preceding claims, **characterized in that** during the evaluation (V33) of the wheel-specific minimum slip values which are correlated with one another it is assumed that geometric slip always occurs simultaneously at a plurality of wheels (11) of the motor vehicle (10), in particular at wheels (11) on the same side of the vehicle.

9. Method according to one of the preceding claims, **characterized in that** during the evaluation (V33) of the wheel-specific minimum slip values which are correlated with one another it is assumed that the wheel-specific geometric slip is approximately zero at at least one wheel (11), in particular at a wheel (11) on the respective other side of the vehicle.

10. Method according to one of the preceding claims, **characterized in that** during the evaluation (V33) of the wheel-specific minimum slip values which are correlated with one another it is assumed that in the case of geometric slip the wheel-specific minimum slip value of a rear-axle wheel (RL, RR) is higher than the wheel-specific minimum slip value of a respective front-axle wheel (FL, FR) on the same side of the vehicle.

11. Method according to one of the preceding claims, **characterized in that** the method is used at low vehicle velocities.

12. Method according to one of the preceding claims, **characterized in that** the steps (V2) to (V4) are used in the case of positive braking slip and/or travel around a bend.

13. Method according to one of the preceding claims, **characterized in that** the predefined slip threshold is set anew (V5) as soon as the conditions for determined geometric slip no longer apply.

14. Vehicle movement dynamics control device (16) in or for a motor vehicle (10) which has a plurality of wheels (11) which can be controlled individually, having a brake slip control apparatus (18) which is designed to carry out a method for setting the slip thresholds according to one of the preceding claims.

15. ABS device (17) or traction control device (18), **characterized in that** it comprises a vehicle movement dynamics control device according to Claim 14.

**Revendications**

1. Procédé de réglage d'un seuil de patinage pour un dispositif de régulation de la dynamique de conduite (16) d'un véhicule automobile (10), comprenant les étapes suivantes :

   prédéfinition (V1) d'un seuil de patinage à partir duquel le dispositif de régulation de la dynamique de conduite (16) est activé en vue de réduire le patinage ;
   détermination (V2) de patinages minimaux individuels de roue pour les roues (11) du véhicule automobile (10), lesquels sont dérivés de signaux de patinage respectifs individuels de roue ;
   reconnaissance (V3) d'un patinage géométrique par corrélation (V32) de tous les patinages minimaux individuels de roue déterminés entre eux et par interprétation (V33) des patinages minimaux individuels de roue corrélés entre eux ; et
   relèvement (V4) du seuil de patinage dans le cas d'un patinage géométrique reconnu.

2. Procédé selon la revendication 1, **caractérisé en ce que** lors de l'étape du relèvement (V4) du seuil de patinage, celui-ci est relevé individuellement pour chaque roue (11) du véhicule automobile (10), notamment en fonction du patinage minimal individuel de roue déterminé pour la roue (11) respective.

**3.** Procédé selon l'une des revendications précédentes, **caractérisé en ce que** lors du relèvement (V4) du seuil de patinage, celui-ci est relevé au moins de la valeur du patinage minimal individuel de roue déterminé.

**4.** Procédé selon l'une des revendications précédentes, **caractérisé en ce que** lors du relèvement (V4) du seuil de patinage, une valeur de patinage prédéfinie maximale n'est pas dépassée.

**5.** Procédé selon la revendication 4, **caractérisé en ce que** la valeur de patinage maximale prédéfinie est dérivée d'une accélération transversale admissible, d'une vitesse du véhicule, d'un rayon de virage maximal dépendant de la vitesse et/ou d'un taux de lacet.

**6.** Procédé selon l'une des revendications précédentes, **caractérisé en ce qu'**un signal de patinage individuel de roue pour une roue respective du véhicule automobile est généré **en ce que** la différence entre une vitesse de référence et une vitesse de roue actuelle mesurée est continuellement calculée pour la roue (11) respective.

**7.** Procédé selon l'une des revendications précédentes, **caractérisé en ce que** dans l'étape de la détermination (V2) de patinages minimaux individuels de roue, une valeur de signal la plus faible du signal de patinage individuel de roue associé à une roue (11) respective est déterminée pendant une durée prédéfinie et utilisée comme patinage minimal individuel de roue pour cette roue (11).

**8.** Procédé selon l'une des revendications précédentes, **caractérisé en ce que** lors de l'interprétation (V33) des patinages minimaux individuels de roue corrélés entre eux, il est supposé qu'un patinage géométrique se produit toujours simultanément au niveau de plusieurs roues (11) du véhicule automobile (10), notamment au niveau des roues (11) du même côté du véhicule.

**9.** Procédé selon l'une des revendications précédentes, **caractérisé en ce que** lors de l'interprétation (V33) des patinages minimaux individuels de roue corrélés entre eux, il est supposé qu'un patinage géométrique individuel de roue est approximativement égal à zéro au niveau d'au moins une roue (11), notamment au niveau d'une roue (11) de l'autre côté respectif du véhicule.

**10.** Procédé selon l'une des revendications précédentes, **caractérisé en ce que** lors de l'interprétation (V33) des patinages minimaux individuels de roue corrélés entre eux, il est supposé que dans le cas d'un patinage géométrique, le patinage minimal individuel de roue d'une roue d'essieu arrière (HL, HR) est supérieur au patinage minimal individuel de roue d'une roue d'essieu avant (VL, VR) respective du même côté du véhicule.

**11.** Procédé selon l'une des revendications précédentes, **caractérisé en ce que** le procédé est utilisé pour des vitesses faibles du véhicule.

**12.** Procédé selon l'une des revendications précédentes, **caractérisé en ce que** les étapes V2 à V4 sont exécutées en présence d'un patinage de freinage positif et/ou d'une trajectoire en virage.

**13.** Procédé selon l'une des revendications précédentes, **caractérisé en ce que** le seuil de patinage prédéfini est de nouveau réglé (V5) dès que les conditions pour un patinage géométrique déterminé ne sont plus présentes.

**14.** Dispositif de régulation de la dynamique de conduite (16) dans ou pour un véhicule automobile (10), lequel possède plusieurs roues (11) pouvant être régulées individuellement, comprenant un système de régulation du patinage de freinage (18) qui est conçu pour mettre en oeuvre un procédé de réglage des seuils de patinage selon l'une des revendications précédentes.

**15.** Dispositif ABS (17) ou dispositif ASR (18), **caractérisé en ce qu'**il comporte un dispositif de régulation de la dynamique de conduite selon la revendication 14.

Fig. 1

Fig.2

Fig.3

**IN DER BESCHREIBUNG AUFGEFÜHRTE DOKUMENTE**

**In der Beschreibung aufgeführte Patentdokumente**

- DE 19936786 A1